# EUROPEAN PATENT APPLICATION

(11) **EP 4 730 474 A2**
(43) Date of publication of application: **22.04.2026**
(21) Application number: 25207656.7
(22) Date of filing: 09.10.2025
(51) Int. Cl.: H01M 10/0587, H01M 50/531, H01M 50/538

(54) **SECONDARY BATTERY, BATTERY PACK AND ELECTRONIC DEVICE**

(30) Priority: 15.10.2024 CN 202422495033 U
(71) Applicant: AESC Japan Ltd., Yokohama-shi, Kanagawa 220-0012 (JP)
(72) Inventor: ZHANG, Wenjing, Jiangyin City, Wuxi City, 214443 (CN)
(74) Representative: Becker, Eberhard

(57) **Abstract**

Disclosed are a secondary battery (100), a battery pack (1002) and an electronic device (1000), which include an electrode assembly (120). The electrode assembly (120) includes a negative electrode sheet (10), a positive electrode sheet (20) and a separator (122) disposed between the negative electrode sheet (10) and the positive electrode sheet (20). The maximum circumference (C) of the electrode assembly (120) is C. In the winding direction (Dj) of the electrode assembly (120), a first length (La) of a third negative electrode uncoated region (18b3) is greater than 0.5C and less than 4C, or a second length (Lc) of a third positive electrode uncoated region (28b3) is greater than C and less than 4C. The above technical solution may at least avoid excessive DC resistance, and may also avoid warping of the outermost negative electrode tab (18b21).

## Description

### BACKGROUND

### Technical Field

The present disclosure relates to a secondary battery, a battery pack, and an electronic device.

### Description of Related Art

In the sector related to new energy power batteries, the application of secondary batteries is more extensive than ever, such as applying secondary batteries (for example, lithium-ion batteries) to electronic devices like vehicles, energy storage, mobile phones, tablet computers, wearable devices, power banks, digital products, electric tools, power devices, energy storage devices, etc. A columnar battery is a type of secondary battery, including a housing and an electrode assembly. The electrode assembly includes a positive electrode sheet, a first separator, a negative electrode sheet and a second separator, which are stacked in sequence and then wound to form an electrode assembly, and then packaged in a housing. However, some improvement still need to be made to existing secondary batteries.

### SUMMARY

To address the problems existing in the related technology, the purpose of the present disclosure lies in providing a secondary battery, a battery pack and an electronic device.

Embodiments of the present disclosure provide a secondary battery, which includes an electrode assembly. The electrode assembly includes a negative electrode sheet, a positive electrode sheet and a separator disposed between the negative electrode sheet and the positive electrode sheet. The positive electrode sheet includes a positive electrode current collector and a positive electrode active material layer. The negative electrode sheet includes a negative electrode current collector and a negative electrode active material layer. Along a height direction of the electrode assembly, the positive electrode current collector includes a positive electrode coated region covered by the positive electrode active material layer and a positive electrode uncoated region not covered by the positive electrode active material layer. The negative electrode current collector includes a negative electrode coated region covered by the negative electrode active material layer and a negative electrode uncoated region not covered by the negative electrode active material layer. A direction from the positive electrode coated region to the positive electrode uncoated region is defined as a first direction. Along a winding direction of the electrode assembly, the positive electrode uncoated region sequentially includes a first positive electrode uncoated region, a second positive electrode uncoated region and a third positive electrode uncoated region. The negative electrode uncoated region sequentially includes a first negative electrode uncoated region, a second negative electrode uncoated region and a third negative electrode uncoated region. Along the first direction, the second positive electrode uncoated region includes a positive electrode tab and a positive electrode connection region connected between the positive electrode tab and the positive electrode coated region. Neither the first positive electrode uncoated region nor the third positive electrode uncoated region includes the positive electrode tab. Along a second direction opposite to the first direction, the second negative electrode uncoated region includes a negative electrode tab and a negative electrode connection region connected between the negative electrode tab and the negative electrode coated region. Neither the first negative electrode uncoated region nor the third negative electrode uncoated region includes the negative electrode tab. A maximum circumference of the electrode assembly is C. In the winding direction of the electrode assembly, a first length of the third negative electrode uncoated region is greater than 0.5C and less than 4C, or a second length of the third positive electrode uncoated region is greater than C and less than 4C.

In the above technical solution, by setting the range of the first length of the third negative electrode uncoated region of the negative electrode sheet to be greater than 0.5C and less than 4C, it is possible to avoid excessive direct current resistance, and also to avoid the outermost negative electrode tab from warping.

In some embodiments, the second length is greater than the first length.

In some embodiments, the first length is greater than 0.8C and less than 4C. The second length is greater than 1.5C and less than 4C.

In some embodiments, the first length is greater than 0.5C and less than 3C. The second length is greater than C and less than 3C.

In some embodiments, in the winding direction of the electrode assembly, a range of a third length of the first negative electrode uncoated region is 300mm-500mm.

In some embodiments, in the winding direction of the electrode assembly, a range of a fourth length of the first positive electrode uncoated region is 400mm-600mm.

In some embodiments, the secondary battery further includes: a housing for accommodating the electrode assembly. The housing includes a peripheral side wall and an end wall connected to one end of the peripheral side wall. Another end of the peripheral side wall has an opening. A crimping part protruding inward is disposed at the peripheral side wall adjacent to the opening. The electrode assembly is located between the end wall and the crimping part, wherein the negative electrode tab faces the opening and is connected to the housing through the negative electrode current collecting plate. A welding position of the negative electrode current collecting plate and the peripheral side wall is located on one side of the crimping part facing the electrode assembly.

In some embodiments, the negative electrode tab is a plurality of segments divided from a part of the negative electrode uncoated region. One end of each of the negative electrode tabs away from the negative electrode connection region bends toward a roll center hole of the electrode assembly. An orthogonal projection of the negative electrode tab in the first direction is located within a region defined by an outer peripheral surface of the electrode assembly.

Embodiments of the present disclosure also provide a battery pack. The battery pack includes the secondary battery described in any one of the above embodiments.

Embodiments of the present disclosure also provide an electronic device. The electronic device includes the above battery pack.

The advantageous technical effects of the present disclosure lie in the following:

By setting the range of the first length of the third negative electrode uncoated region without electrode tab at a winding tail of the negative electrode sheet to be greater than 0.5C and less than 4C, or by setting the range of the second length of the third positive electrode uncoated region without electrode tab at a winding tail of the positive electrode sheet to be greater than C and less than 4C, it is possible to avoid excessive direct current resistance and also avoid the outermost electrode tab from warping.

### BRIEF DESCRIPTION OF THE DRAWINGS

In order to more clearly illustrate technical solutions in the embodiments of the present disclosure or in the related art, the following will briefly introduce drawings required for use in the description of the embodiments or the related art. Clearly, the drawings in the following description are some embodiments of the present disclosure. For those of ordinary skill in the art, other drawings may also be obtained according to these drawings without creative effort.
FIG. 1 shows a schematic view when an electronic device of an embodiment of the present disclosure is a vehicle.
FIG. 2 shows a perspective view of a secondary battery according to an embodiment of the present disclosure.
FIG. 3 shows a cross-sectional view of a secondary battery according to an embodiment of the present disclosure.
FIG. 4 shows a cross-sectional view of an electrode assembly according to an embodiment of the present disclosure.
FIG. 5 shows a perspective view of an electrode assembly according to an embodiment of the present disclosure.
FIG. 6 shows a plan view of a negative electrode sheet in an unfolded state according to an embodiment of the present disclosure.
FIG. 7 shows a plan view of a positive electrode sheet in an unfolded state according to an embodiment of the present disclosure.

### DESCRIPTION OF THE EMBODIMENTS

For a better understanding of the spirit of the embodiments of the present disclosure, the following provides further illustration in conjunction with some preferred embodiments of the present disclosure.

Embodiments of the present disclosure will be described in detail below. Throughout the specification of the present disclosure, identical or similar components and components having identical or similar functions are represented by similar reference numerals. The embodiments described herein with respect to the drawings are illustrative, diagrammatic, and are provided to give a basic understanding of the present disclosure. The embodiments of the present disclosure should not be construed as limiting the present disclosure.

As used herein, the terms "substantially," "basically," "essentially," and "approximately" are used to describe and illustrate small variations. When used in conjunction with an event or circumstance, the terms may refer to instances in which the event or circumstance occurs exactly as well as instances in which the event or circumstance occurs very closely.

In this specification, unless specifically designated or limited otherwise, relative terms such as: "central," "longitudinal," "lateral," "front," "rear," "right," "left," "internal," "external," "lower," "higher," "horizontal," "vertical," "above," "below," "upper," "lower," "top," "bottom," and their derivative terms (such as "horizontally," "downwardly," "upwardly," etc.) should be interpreted as referring to the orientation described in the discussion or shown in the drawings. These relative terms are used merely for descriptive convenience and do not require that the present disclosure be constructed or operated in a particular orientation.

For ease of description, "first," "second," "third," etc. may be used herein to distinguish different components of a figure or series of figures. "First," "second," "third," etc. are not intended to describe corresponding components. Additionally, where there is no conflict, the embodiments in the present disclosure and the features in the embodiments may be combined with each other. The present disclosure will be described in detail below with reference to the drawings and in conjunction with embodiments.

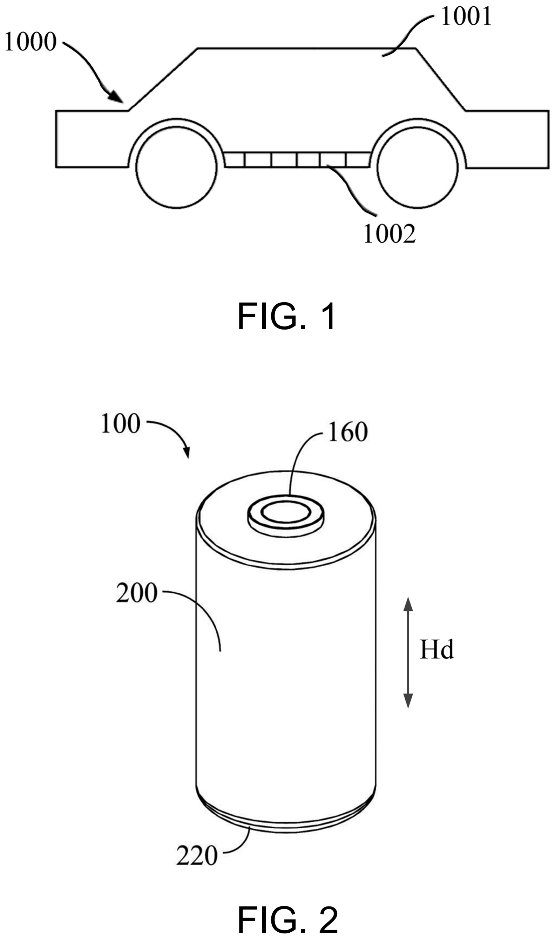

The present disclosure provides an electronic device 1000. For convenience of illustration, the following embodiments are described by taking the electronic device 1000 as a vehicle as an example. Referring to FIG. 1, a battery pack 1002 is disposed inside the vehicle, and the battery pack 1002 may be disposed at the bottom or head or tail of the vehicle body 1001. The battery pack 1002 may be used for power supply of the vehicle. For example, the battery pack 1002 may serve as an operating power source of the vehicle. An operation part of the electronic device 1000 is electrically connected with the battery pack 1002 to obtain electrical energy support. The vehicle may be a fuel vehicle, a gas vehicle, or a new energy vehicle. The new energy vehicle may be a pure electric vehicle, a hybrid vehicle, or an extended-range vehicle, etc., but is not limited thereto. The operation part is the vehicle body, the battery pack 1002 is disposed at the bottom of the vehicle body, and provides electrical energy support for the operation of the vehicle or the operation of electrical components in the vehicle. However, in some other embodiments, the electronic device 1000 may also be a mobile phone, a portable device, a laptop computer, a ship, a spacecraft, an electric toy, an electric tool, etc. The spacecraft includes aircraft, rockets, space shuttles, spaceships, etc. The operation part may be a unit component that obtains electrical energy from the battery pack 1002 and performs corresponding operations, such as a blade rotation unit of a fan, a dust suction operation unit of a vacuum cleaner, etc. The electric toys include fixed or mobile electric toys, for example, game machines, electric car toys, electric ship toys, electric airplane toys, etc. The electric tools include metal cutting electric tools, grinding electric tools, assembly electric tools, and railway electric tools, for example, electric drills, electric grinders, electric wrenches, electric screwdrivers, electric hammers, impact drills, concrete vibrators, electric planers, etc. The embodiments of the present disclosure do not impose special restrictions on the above electronic device 1000.

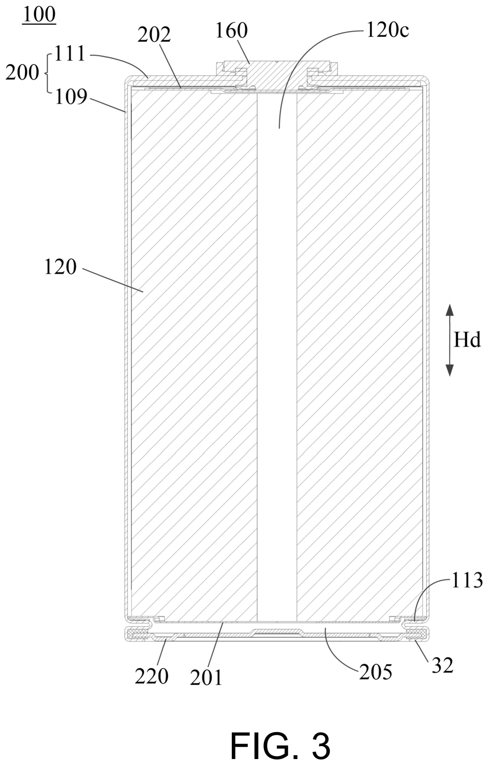

The battery pack 1002 may include a plurality of secondary batteries (such as columnar battery 100). In the following description, the secondary battery is described as a columnar battery as an example. FIG. 2 shows a perspective view of the columnar battery 100 according to an embodiment of the present disclosure, and FIG. 3 shows a cross-sectional view of the columnar battery 100 according to an embodiment of the present disclosure.

As shown in FIG. 2 to FIG. 3, the columnar battery 100 includes a housing 200. The housing 200 includes a peripheral side wall 109 and an end wall 111 connected to one end of the peripheral side wall 109. An opening 205 is disposed at the other end of the peripheral side wall 109 opposite to the end wall 111, and a cover plate 220 covers the opening 205 of the housing 200. The cover plate 220 may be configured to jointly package the electrode assembly 120 and an electrolyte with the housing 200. The material of the housing 200 may be any one of various available materials, such as copper, iron, aluminum, steel, aluminum alloy, etc. The housing 200 may be columnar and define an accommodating cavity, and the electrode assembly 120 is disposed in the accommodating cavity. An outer diameter size of the housing 200 may be determined according to the specific diameter size of the electrode assembly 120. For example, the outer diameter of the housing 200 may be 18mm, 21mm, 46mm, etc. In some embodiments, the columnar battery 100 may be a 4680 columnar battery (outer diameter 46mm, height 80mm), or the columnar battery 100 may be a 4695 columnar battery (outer diameter 46mm, height 95mm), or the columnar battery 100 may be a 46120 columnar battery (outer diameter 46mm, height 120mm).

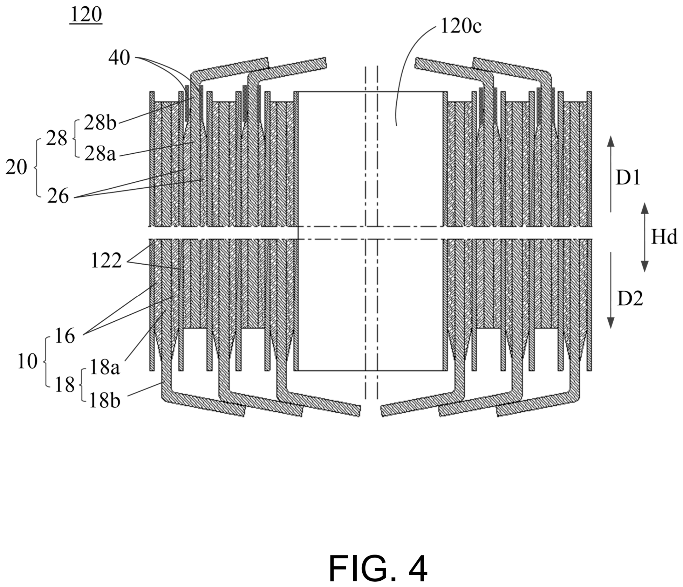

The electrode assembly 120 may be mainly formed by sequentially stacking and winding a positive electrode sheet, a negative electrode sheet, and a separator located between the positive electrode sheet and the negative electrode sheet (described in detail below with reference to FIG. 4). The wound electrode assembly 120 has a roll center hole 120c.

A crimping part 113 (which may also be called a crimping groove) protruding inward is formed at the peripheral side wall of the housing 200 adjacent to the opening 205. The electrode assembly 120 is disposed between the end wall 111 and the crimping part 113, and the crimping part 113 may restrict the movement of the electrode assembly 120 in the height direction Hd and an opposite direction thereof between the end wall 111 and the crimping part 113. An end part of the peripheral side wall 109 of the housing 200 at the opening 205 side may be configured as a curled edge part 32, and the curled edge part 32 extends inward along a radial direction of the housing 200. The curled edge part 32 and the crimping part 113 are spaced apart in the height direction Hd, and the crimping part 113 and the curled edge part 32 may jointly clamp the cover plate 220. The cover plate 220 is electrically insulated from the housing 200.

The negative electrode tab of the electrode assembly 120 faces the opening 205, and may be electrically connected to the housing 200 through a negative electrode current collecting plate 201 located between the cover plate 220 and the electrode assembly 120, so that the housing 200 is negatively charged. The negative electrode current collecting plate 201 may be welded to the housing 200 by laser welding. Specifically, the welding position of the negative electrode current collecting plate 201 and the housing 200 may be located at one side of the crimping part 113 facing the electrode assembly 120.

The columnar battery 100 may also include a terminal post 160. The terminal post 160 passes through the end wall 111 and is insulated from the end wall 111. The terminal post 160 may be electrically connected to the positive electrode tab of the electrode assembly 120 through a positive electrode current collecting plate 202 located between the end wall 111 and the electrode assembly 120, so that the terminal post 160 is positively charged. In some embodiments, the terminal post 160 may be welded to the positive electrode current collecting plate 202 by laser penetration welding.

FIG. 4 shows a cross-sectional view of the electrode assembly 120 according to some embodiments. As shown in FIG. 4, the electrode assembly 120 is mainly formed by winding the negative electrode sheet 10 and the positive electrode sheet 20, and the separator 122 is disposed between the negative electrode sheet 10 and the positive electrode sheet 20. An electrolyte may be filled between the negative electrode sheet 10, the positive electrode sheet 20, and the separator 122.

The negative electrode sheet 10 may include a negative electrode current collector 18 and a negative electrode active material layer 16, and part of the opposite surfaces of the negative electrode current collector 18 along a thickness direction thereof is covered by the negative electrode active material layer 16. In the height direction Hd, the negative electrode current collector 18 includes a negative electrode coated region 18a covered by the negative electrode active material layer 16, and a negative electrode uncoated region 18b not covered by the negative electrode active material layer 16. The positive electrode sheet 20 includes a positive electrode current collector 28 and a positive electrode active material layer 26, and at least part of the opposite surfaces of the positive electrode current collector 28 along a thickness direction thereof is covered by the positive electrode active material layer 26. In the height direction Hd, the positive electrode current collector 28 includes a positive electrode coated region 28a covered by the positive electrode active material layer 26, and a positive electrode uncoated region 28b not covered by the positive electrode active material layer 26. The negative electrode uncoated region 18b of the negative electrode current collector 18 and the positive electrode uncoated region 28b of the positive electrode current collector 28 are respectively located at opposite ends of the electrode assembly 120 in the height direction Hd. The negative electrode uncoated region 18b of the negative electrode current collector 18 may be configured to form a negative electrode tab. The positive electrode uncoated region 28b of the positive electrode current collector 28 may be configured to form a positive electrode tab. A direction from the positive electrode coated region 28a to the positive electrode uncoated region 28b is defined as a first direction D1, and an opposite direction thereof is the D2 direction.

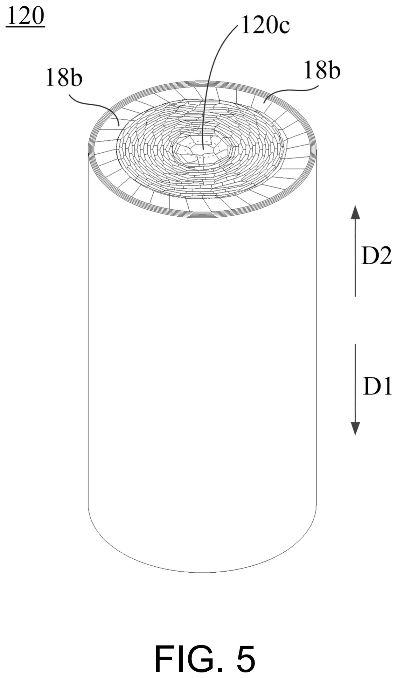

FIG. 5 is a perspective view of an electrode assembly according to an embodiment of the present disclosure. Referring to FIG. 4 and FIG. 5, the negative electrode uncoated region 18b and the positive electrode uncoated region 28b may be bent toward a roll center hole 120c of the electrode assembly 120. The bent negative electrode uncoated region 18b and positive electrode uncoated region 28b may be stacked with each other. The negative electrode uncoated regions 18b stacked onto each other may be welded to the negative electrode current collecting plate 201, and further electrically connected to the housing 200 (see FIG. 3). The positive electrode uncoated regions 28b stacked onto each other may be welded to the positive electrode current collecting plate 202, and further electrically connected to the terminal post 160 (see FIG. 3). Bending the negative electrode uncoated region 18b and the positive electrode uncoated region 28b may reduce the space occupied by the negative electrode uncoated region 18b and the positive electrode uncoated region 28b, thereby improving battery energy density.

Taking a lithium-ion battery as an example, the material of the negative electrode current collector 18 may be, for example, copper, and the negative electrode current collector 18 is a copper foil. The negative electrode active material of the negative electrode active material layer 16 may be carbon or silicon, etc. The material of the positive electrode current collector 28 may be aluminum, for example. The positive electrode active material of the positive electrode active material layer 26 may be lithium cobalt oxide, lithium iron phosphate, ternary lithium or lithium manganese oxide, etc. The material of the separator 122 may be PP (polypropylene) or PE (polyethylene), etc.

In order to minimize the possibility of contact between the negative electrode sheet 10 and the positive electrode sheet 20, the electrode assembly 120 may further include an insulation layer 40, and the insulation layer 40 covers at least part of the positive electrode uncoated region 28b of the positive electrode current collector 28. The insulation layer 40 may be disposed on both side surfaces of the positive electrode current collector 28. The insulation layer 40 may effectively prevent electrical contact between the negative electrode sheet 10 and the positive electrode sheet 20.

In some embodiments, the insulation layer 40 is mainly composed of: boehmite and PVDF (full name: polyvinylidene difluoride). The proportion of boehmite is 80%; the proportion of PVDF is 20%. In some embodiments, the insulation layer is a ceramic material layer. The thickness of the insulation layer 40 is 1.5mm-2.5mm, for example, the thickness of the insulation layer may be 1.5mm, 1.7mm, 2mm, 2.1mm, 2.3mm or 2.5mm, etc. By setting the thickness of the insulation layer 40 to be with a specific range, it is possible to avoid that the coating thickness of the insulation layer 40 is too thin, which would make it difficult to obtain the required electrical insulation and support strength. Meanwhile, it is possible to avoid that the thickness of the insulation layer 40 is too thick, which would lead to the possibility of long curing time of the coating layer and increased thickness of the overall structure.

In some embodiments, the insulation layer 40 includes a color developer, so as to distinguish whether the side coated with the insulation layer 40 is the front side or the back side of the positive electrode sheet 20 through the coloring effect of the color developer, including but not limited to distinguishing the surface density of the front and back sides of the positive electrode sheet 20 and so on. The main ingredients of the color developer may be bismuth vanadate, and the color is yellow.

In an example of the columnar battery 100 of the present disclosure, the manufacturing method of the columnar battery 100 in the present disclosure includes the following steps:
Winding: the negative electrode sheet 10, the separator 122, and the positive electrode sheet 20 are stacked and wound to form a winding structure, and the negative electrode uncoated region 18b of the negative electrode current collector 18 of the negative electrode sheet 10 and the positive electrode uncoated region 28b of the positive electrode current collector 28 of the positive electrode sheet 20 are bent along a radial direction of the electrode assembly 120.

Welding of current collecting plates and electrode assembly: the negative electrode current collecting plate 201 and the positive electrode current collecting plate 202 are respectively connected to surface regions of the bent negative electrode uncoated region 18b and the positive electrode uncoated region 28b by means of welding.

Insertion into housing: the electrode assembly 120 that has been welded with the negative electrode current collecting plate 201 and the positive electrode current collecting plate 202 is inserted into the housing 200 through the opening 205. The method of inserting the electrode assembly 120 in this step is not limited herein, for example, the insertion may be performed manually or through a robotic arm.

The terminal post 160 is disposed.

Inject electrolyte: the injection method of the electrolyte is not limited herein, and the electrolyte may be injected through the opening 205 as an option. In this embodiment, the electrolyte is injected through the opening 205, so that the process of opening an injection hole on the end wall 111 may be omitted, and the existing opening 205 may be adopted directly for injection, thus simplifying the process and reducing costs.

Sealing: the cover plate 220 is disposed on the opening 205 in a sealed manner, and there are a plurality of sealing methods, which are not limited herein. In some embodiments, first an outer periphery of the housing 200 is roll-pressed to form the crimping part 113 that is recessed toward the center of the housing 200 to limit the movement of the electrode assembly 120 in the height direction Hd. Then, a mechanical sealing process is performed to seal the cover plate 220 to form a curled edge part 32, thereby disposing the cover plate 220 on the opening 205 of the housing 200 in a sealed manner. The process involved in this step is well-established, cost-effective, and highly efficient.

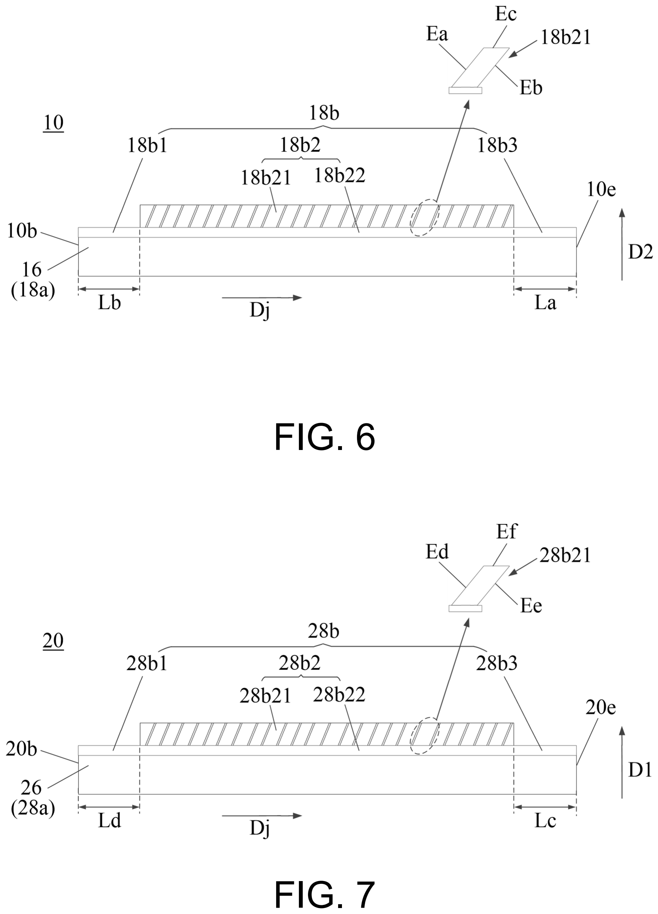

FIG. 6 is a plan view of the negative electrode sheet 10 in an unfolded state according to an embodiment of the present disclosure. Referring to FIG. 5 and FIG. 6, a part of the negative electrode uncoated region 18b forms a plurality of negative electrode tabs 18b21. The plurality of negative electrode tabs 18b21 are a plurality of segments divided from a part of the negative electrode uncoated region 18b. One end of each of the negative electrode tabs 18b21 away from the negative electrode active material layer 16 is bent toward the roll center hole 120c of the electrode assembly 120.

Specifically, referring to FIG. 6, along a winding direction Dj, the negative electrode sheet 10 starts winding from a winding start end 10b and terminates winding at a winding terminal 10e. Along the winding direction Dj, the negative electrode uncoated region 18b sequentially includes a first negative electrode uncoated region 18b1, a second negative electrode uncoated region 18b2, and a third negative electrode uncoated region 18b3. Along the second direction D2, the second negative electrode uncoated region 18b2 includes the plurality of negative electrode tabs 18b21 and a negative electrode connection region 18b22 connected between the negative electrode tabs 18b21 and the negative electrode coated region 18a. Neither the first negative electrode uncoated region 18b1 nor the third negative electrode uncoated region 18b3 includes the negative electrode tabs 18b21. The first negative electrode uncoated region 18b1 is connected to the winding start end 10b of the negative electrode sheet 10. The third negative electrode uncoated region 18b3 is connected to the winding terminal 10e of the negative electrode sheet 10. The plurality of negative electrode tabs 182 are disposed along the winding direction Dj. The plurality of negative electrode tabs 182 may be formed by cutting a part of the negative electrode uncoated region 18b. The negative electrode connection region 18b22 is an uncut part of the negative electrode uncoated region 18b.

A maximum circumference (i.e., outer circumference) of the electrode assembly 120 is C, C=πd, where d is an outer diameter of the electrode assembly 120. In some embodiments, in the winding direction Dj of the electrode assembly 120, a first length La of the third negative electrode uncoated region 18b3 is greater than 0.5C and less than 4C. That is to say, the negative electrode tabs 18b21 are not disposed within 0.5 to 4 turns at the winding tail of the negative electrode sheet 10. If the first length La is too long, the DCR (direct current resistance) of the battery may be too large; if the first length La is too short, the outermost negative electrode tab 18b21 adjacent to the winding terminal 10e may warp, making processing difficult. By setting the range of the first length La to be greater than 0.5C and less than 4C, it is possible to avoid excessive DCR, and warping of the outermost negative electrode tab may also be avoided.

Generally, when the negative electrode tab 18b21 is bent, the bent region may protrude radially in a direction away from the roll center hole 120c. By setting the third negative electrode uncoated region 18b3 without tabs having the first length La, an orthogonal projection of the negative electrode tab 18b21 in the first direction D1 is located within the region defined by the outer peripheral surface of the electrode assembly 120, that is, the negative electrode tab 18b21 will not bend and protrude radially beyond the outer peripheral surface of the electrode assembly 120 to reach beyond the diameter of the outer peripheral surface.

In some embodiments, in the winding direction Dj, a third length Lb of the first negative electrode uncoated region 18b1 of the negative electrode sheet 10 is 300mm-500mm. By setting the third length Lb of the first negative electrode uncoated region 18b1 without tabs at the winding start end 10b to be 300mm-500mm, tabs may not extend from the inner turns near the roll center hole 120c, thus preventing the tabs from blocking the center hole and affecting the safety performance of the battery. In some embodiments, the diameter of the roll center hole 120c ranges from 4mm to 7mm.

Each of the negative electrode tabs 18b21 may include a first edge Ea and a second edge Eb opposite to each other in the winding direction Dj, and a third edge Ec connecting the first edge Ea and the second edge Eb at an end part away from the negative electrode connection region 18b22. The first edge Ea and the second edge Eb may be parallel to each other. The second edge Eb is closer to the winding terminal 10e than the first edge Ea, and the first edge Ea and the second edge Eb are inclined toward the winding terminal 10e, so that an angle between the second edge Eb and the third edge Ec is an acute angle. During the process of winding the negative electrode sheet 10, since the first edge Ea and the second edge Eb of each of the negative electrode tabs 18b21 are inclined toward the winding terminal 10e, it is possible to facilitate bending and flattening the negative electrode tabs 18b21 toward the roll center hole 120c when winding the negative electrode sheet 10, thereby effectively reducing the force required to bend the negative electrode tabs 18b21, thus avoiding deformation of the electrode sheet, reducing material shedding of the negative electrode active material layer 16 of the negative electrode sheet 10, and improving the yield rate of the electrode assembly 120.

FIG. 7 is a plan view of the positive electrode sheet 20 in an unfolded state according to an embodiment of the present disclosure. As shown in FIG. 4 and FIG. 7, a part of the positive electrode uncoated region 28b is formed into a plurality of positive electrode tabs 28b21. The plurality of positive electrode tabs 28b21 are a plurality of segments divided from a part of the positive electrode uncoated region 28b, and one end of each of the positive electrode tabs 28b21 away from the positive electrode active material layer 26 is bent toward the roll center hole 120c of the electrode assembly 120.

Specifically, referring to FIG. 7, along the winding direction Dj, the positive electrode sheet 20 starts winding from a winding start end 20b thereof and terminates at a winding terminal 20e. Along the winding direction Dj, the positive electrode uncoated region 28b sequentially includes a first positive electrode uncoated region 28b1, a second positive electrode uncoated region 28b2, and a third positive electrode uncoated region 28b3. Along the first direction D1, the second positive electrode uncoated region 28b2 includes the plurality of positive electrode tabs 28b21 and a positive electrode connection region 28b22 connected between the positive electrode tabs 28b21 and the positive electrode coated region 28a. Neither the first positive electrode uncoated region 28b1 nor the third positive electrode uncoated region 28b3 includes the positive electrode tabs 28b21. The first positive electrode uncoated region 28b1 is connected to the winding start end 20b of the positive electrode sheet 20. The third positive electrode uncoated region 28b3 is connected to the winding terminal 20e of the positive electrode sheet 20.

In the winding direction Dj, a second length Lc of the third positive electrode uncoated region 28b3 of the positive electrode sheet 20 is greater than C and less than 4C. If the second length Lc is too long, the DCR of the battery may be too large; if the second length Lc is too short, the outermost positive electrode tab 28b21 adjacent to the winding terminal 20e may warp and are difficult to process. By setting the range of the second length Lc to be greater than C and less than 4C, it is possible to avoid excessive DCR, and warping of the outermost positive electrode tab may also be avoided.

Generally, when the positive electrode tab 28b21 is bent, the bent region may protrude radially in a direction away from the roll center hole 120c. By setting the third positive electrode uncoated region 28b3 without tabs having the second length Lc, an orthogonal projection of the positive electrode tab 28b21 in the second direction D2 is located within the region defined by the outer peripheral surface of the electrode assembly 120, that is, the positive electrode tab 28b21 may not bend and protrude radially beyond the outer peripheral surface of the electrode assembly 120 to reach beyond the diameter of the outer peripheral surface.

In some embodiments, in the winding direction Dj, a fourth length Ld of the first positive electrode uncoated region 28b1 of the positive electrode sheet 20 is 400mm-600mm, so that tabs may not extend from the inner turns near the roll center hole to prevent the tabs from blocking the center hole and affecting the safety performance of the battery.

With reference to FIG. 6 and FIG. 7, in some embodiments, the second length Lc of the third positive electrode uncoated region 28b3 of the positive electrode sheet 20 may be greater than the first length La of the third negative electrode uncoated region 18b3 of the negative electrode sheet 10. For example, for a 46-series columnar battery with an outer diameter of 46mm, the first length La is, for example, 140mm, and the second length Lc is, for example, 280mm. Because the hardness of the positive electrode current collector 28 (for example, made of aluminum) is generally greater than the hardness of the negative electrode current collector 18 (for example, made of copper), after the positive electrode current collector 28 and the negative electrode current collector 18 are formed into positive electrode tabs and negative electrode tabs and are bent, the high hardness of the positive electrode current collector will cause a tab bent region at the outermost turn of the electrode assembly to exceed the maximum diameter of the outer peripheral surface of the electrode assembly, which would affect the overall radial dimension of the electrode assembly and cause difficulty in inserting the electrode assembly into the housing. Therefore, by controlling the second length Lc of the third positive electrode uncoated region 28b3 without tabs of the positive electrode sheet 20 to be longer than the first length La of the third negative electrode uncoated region 18b3 of the negative electrode sheet 10, it is possible to prevent the tab bent region from exceeding the maximum diameter of the outer peripheral surface of the electrode assembly and prevent difficulty in inserting the electrode assembly into the housing.

In this embodiment, similar to the negative electrode tab, a first edge Ed and a second edge Ee of the positive electrode tab 28b21 are inclined toward the winding terminal 20e, and an angle between the second edge Ee and a third edge Ef of the positive electrode tab 28b21 is an acute angle. During the process of winding the positive electrode sheet 20, since the first edge Ed and the second edge Ee of each of the positive electrode tabs 28b21 are inclined toward the winding terminal 20e, it is possible to effectively reduce the force required for bending the positive electrode tab 28b21, thereby avoiding deformation of the electrode sheet, reducing material shedding of the positive electrode active material layer 26, and improving the yield rate of the electrode assembly 120.

In some embodiments, for a 46-series columnar battery with an outer diameter of 46mm, the first length La is greater than 0.8C and less than 4C, and the second length Lc is greater than 1.5C and less than 4C. In this embodiment, C=π×46mm. For the 46-series columnar battery, the first length La in the range of 0.8C to 4C and the second length Lc in the range of 1.5C to 4C may make it more possible to effectively avoid excessive DCR of the 46-series columnar battery and avoid warping of the outermost tab.

In some embodiments, for a 21-series columnar battery with an outer diameter of 21mm, the first length La is greater than 0.5C and less than 3C, and the second length Lc is greater than C and less than 3C. In this embodiment, C=π×21mm. For the 21-series columnar battery, the first length La in the range of 0.5C to 3C and the second length Lc in the range of C to 3C may make it more possible to effectively avoid excessive DCR of the 21-series columnar battery and avoid warping of the outermost tab.

## Claims

1. A secondary battery (100), comprising an electrode assembly (120), the electrode assembly (120) comprising a negative electrode sheet (10), a positive electrode sheet (20) and a separator (122) disposed between the negative electrode sheet (10) and the positive electrode sheet (20),
wherein the positive electrode sheet (20) comprises a positive electrode current collector (28) and a positive electrode active material layer (26), the negative electrode sheet (10) comprises a negative electrode current collector (18) and a negative electrode active material layer (16), along a height direction (Hd) of the electrode assembly (120), the positive electrode current collector (28) comprises a positive electrode coated region (28a) covered by the positive electrode active material layer (26) and a positive electrode uncoated region (28b) not covered by the positive electrode active material layer (26), the negative electrode current collector (18) comprises a negative electrode coated region (18a) covered by the negative electrode active material layer (16) and a negative electrode uncoated region (18b) not covered by the negative electrode active material layer (16), a direction from the positive electrode coated region (28a) to the positive electrode uncoated region (28b) is defined as a first direction (D1),
along a winding direction (Dj) of the electrode assembly (120), the positive electrode uncoated region (28b) sequentially comprises a first positive electrode uncoated region (28b1), a second positive electrode uncoated region (28b2) and a third positive electrode uncoated region (28b3), the negative electrode uncoated region (18b) sequentially comprises a first negative electrode uncoated region (18b1), a second negative electrode uncoated region (18b2) and a third negative electrode uncoated region (18b3);
along the first direction (D1), the second positive electrode uncoated region (28b2) comprises a positive electrode tab (28b21) and a positive electrode connection region (28b22) connected between the positive electrode tab (28b21) and the positive electrode coated region (28a), neither the first positive electrode uncoated region (28b1) nor the third positive electrode uncoated region (28b3) comprises the positive electrode tab (28b21);
along a second direction (D2) opposite to the first direction (D1), the second negative electrode uncoated region (18b2) comprises at least one negative electrode tab (18b21) and a negative electrode connection region (18b22) connected between the at least one negative electrode tab (18b21) and the negative electrode coated region (18a), neither the first negative electrode uncoated region (18b1) nor the third negative electrode uncoated region (18b3) comprises the at least one negative electrode tab (18b21),
wherein a maximum circumference (C) of the electrode assembly (120) is C, in the winding direction (Dj) of the electrode assembly (120), a first length (La) of the third negative electrode uncoated region (18b3) is greater than 0.5C and less than 4C, or a second length (Lc) of the third positive electrode uncoated region (28b3) is greater than C and less than 4C.

2. The secondary battery (100) according to claim 1, wherein, the second length (Lc) is greater than the first length (La).

3. The secondary battery (100) according to claim 1, wherein the first length (La) is greater than 0.8C and less than 4C, and the second length (Lc) is greater than 1.5C and less than 4C.

4. The secondary battery (100) according to claim 1, wherein the first length (La) is greater than 0.5C and less than 3C, and the second length (Lc) is greater than C and less than 3C.

5. The secondary battery (100) according to claim 1, wherein in the winding direction (Dj) of the electrode assembly (120), a range of a third length (Lb) of the first negative electrode uncoated region (18b1) is 300mm-500mm.

6. The secondary battery (100) according to claim 1, wherein in the winding direction (Dj) of the electrode assembly (120), a range of a fourth length (Ld) of the first positive electrode uncoated region (28b1) is 400mm-600mm.

7. The secondary battery (100) according to claim 1, further comprising:
a housing (200) for accommodating the electrode assembly (120), wherein the housing (200) comprises a peripheral side wall (109) and an end wall (111) connected to one end of the peripheral side wall (109), another end of the peripheral side wall (109) has an opening (205), a crimping part (113) protruding inward is disposed at the peripheral side wall (109) adjacent to the opening (205), the electrode assembly (120) is located between the end wall (111) and the crimping part (113),
wherein the at least one negative electrode tab (18b21) faces the opening (205) and is connected to the housing (200) through a negative electrode current collecting plate (201), a welding position of the negative electrode current collecting plate (201) and the peripheral side wall (109) is located on one side of the crimping part (113) facing the electrode assembly (120).

8. The secondary battery (100) according to claim 1, wherein the at least one negative electrode tab (18b21) comprises a plurality of negative electrode tabs (18b21),
each of the plurality of negative electrode tabs (18b21) is a plurality of segments divided from a part of the negative electrode uncoated region (18b), one end of each of the plurality of negative electrode tabs (18b21) away from the negative electrode connection region (18b22) bends toward a roll center hole (120c) of the electrode assembly (120);
an orthogonal projection of each of the plurality of negative electrode tabs (18b21) in the first direction (D1) is located within a region defined by an outer peripheral surface of the electrode assembly (120).

9. A battery pack (1002), comprising the secondary battery (100) according to any one of claims 1-8.

10. An electronic device (1000), comprising the battery pack (1002) according to claim 9.
